# EUROPÄISCHE PATENTSCHRIFT

(11) **EP 0 806 312 B1**
(45) Veröffentlichungstag und Bekanntmachung des Hinweises auf die Patenterteilung: **04.12.2002**
(21) Anmeldenummer: 97103396.4
(22) Anmeldetag: 01.03.1997
(51) Int. Cl.: B60J 7/12

(54) **Faltverdeck für ein Cabriolet-Fahrzeug**
Foldable top for convertible vehicle
Capote pliante pour véhicule convertible

(30) Priorität: 07.05.1996 DE 19618296
(43) Veröffentlichungstag der Anmeldung: 12.11.1997
(73) Patentinhaber: Wilhelm Karmann GmbH, D-49084 Osnabrück (DE)
(72) Erfinder: Wagner, Tobias, 49086 Osnabrück (DE); Maass, Joachim, 49143 Bissendorf (DE)
(74) Vertreter: Busse & Busse Patentanwälte

(56) Entgegenhaltungen:
- DE-B- 2 327 486
- DE-C- 4 438 253

## Beschreibung

Die Erfindung bezieht sich auf ein Faltverdeck für ein Cabriolet-Fahrzeug nach dem Oberbegriff des Anspruches 1.

Bei bekannten Cabriolet-Fahrzeugen dieser Art (z.B. DE 44 38 253 C1 oder DE 2327486 A) weist das Faltverdeck einen mit dessen Dachhaut verbundenen Verdeckstoffspannbügel auf, der in seiner Längsrichtung im wesentlichen der Dachhautkontur im heckseitigen Bereich folgt. Bei einer Ausbildung des Faltverdecks als ein in eine Verdeckwanne absenkbares Bauteil ist eine dem Verdeckstoffspannbügel entsprechende Mindestgröße für eine Aufnahmeöffnung der Verdeckwanne vorgesehen und damit insgesamt ein entsprechend platzaufwendiger Bewegungsraum in der Fahrzeugkarosserie erforderlich. Dieses Problem wird erfindungsgemäß mit den Merkmalen des Anspruchs 1 gelöst.

Bei dem erfindungsgemäß ausgebildeten Faltverdeck ist der Verdeckstoffspannbügel als eine mehrteilige Baugruppe ausgebildet, so daß über jeweilige Verbindungsglieder zum am Verdeckstoffspannbügel angreifenden Verdeckantrieb hin eine Zwangssteuerung der Einzelteile des Verdeckstoffspannbügels möglich ist. Damit kann die Breite des Verdeckstoffspannbügels während der Bewegung des Faltverdeckes, beispielsweise beim Absenken in eine Verdeckwanne, zumindest phasenweise so verringert werden, daß auch unter beengten Platzverhältnissen eine ungehinderte Bewegung der Faltverdeckteile über einen großen Schwenkwinkel möglich und in der Faltstellung eine raumsparende Packungsdichte erreicht ist.

Über die zwangsgesteuerte Bewegung der Einzelteile des Verdeckstoffspannbügels ist mit geringem Aufwand auch eine bereichsweise Spannung bzw. Entspannung der Dachhaut möglich, so daß unbeabsichtigte Längungen oder Überdehnungen des Verdeckstoffes vermieden sind und der im Bereich der Heckscheibe vorgesehene Dachhautbereich an eine Vergrößerung der Scheibenfläche anpaßbar ist.

In der nachfolgenden Beschreibung wird anhand der Zeichnung ein Ausführungsbeispiel eines erfindungsgemäß ausgebildeten Faltverdecks schematisch veranschaulicht. In der Zeichnung zeigen:
- Fig. 1: eine perspektivische Gesamtansicht eines Faltverdecks ohne Dachhaut,
- Fig. 2: eine vergrößerte Ausschnittsdarstellung des seitlichen Heckbereichs des Faltverdecks in Draufsicht,
- Fig. 3: eine Auschnittsdarstellung des Faltverdecks mit einem entgegen der Fahrtrichtung verschwenkten Verdeckstoffspannbügel, und
- Fig. 4: eine vergrößerte Ausschnittsdarstellung des Verdeckstoffspannbügels in mehrteiliger Ausführung im Bereich zwischen einem Mittelteil und einem Seitenteil.

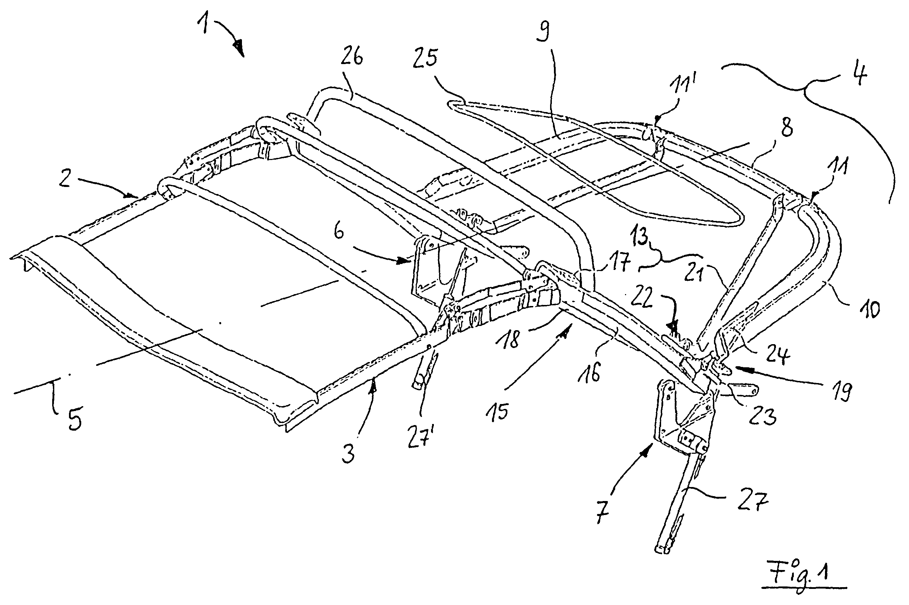

In Fig. 1 ist eine insgesamt mit 1 bezeichnete Faltverdeck-Baugruppe (ohne Dachhaut) für ein Cabriolet-Fahrzeug veranschaulicht, wobei ein randseitige Verdeckgestellteile 2 und 3 aufweisendes Verdeckgestell im heckseitigen Endbereich mit einem Verdeckstoffspannbügel 4 zusammenwirkt, der gemeinsam mit den Einzelbauteilen des Verdeckgestells im Bereich von jeweils symmetrisch zur Fahrzeuglängsachse 5 angeordneten Hauptschwenklagern 6 und 7 abgestützt ist.

Der Verdeckstoffspannbügel 4 ist mehrteilig ausgebildet, wobei dieser in zweckmäßiger Ausführung einen Mittelteil 8 und symmetrisch zu diesem angeordnete Seitenteile 9 und 10 aufweist. Ebenso ist denkbar, den Verdeckstoffspannbügel zweiteilig auszubilden oder weitere Unterteilungen des Mittelteils 8 und/oder der Seitenteile 9 und 10 vorzusehen (nicht dargestellt), so daß weitere einzeln bewegbare Glieder gebildet sind.

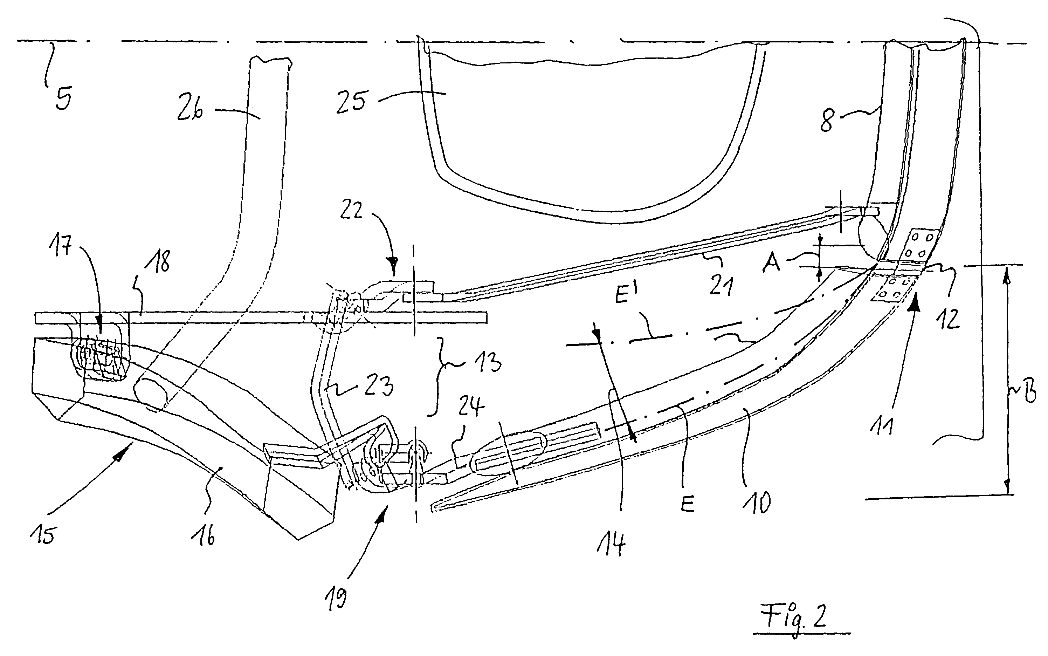

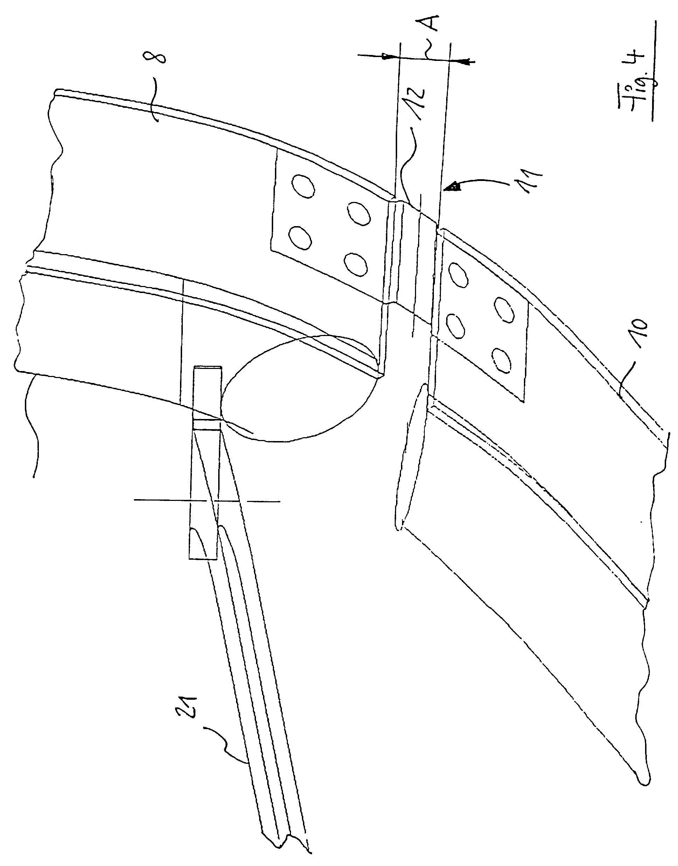

Die Draufsicht gemäß Fig. 2 verdeutlicht in Zusammenschau mit Fig. 4 die zweckmäßige Ausbildung der Verbindung zwischen dem Mittelteil 8 und den jeweiligen Seitenteilen 9 bzw. 10 als ein Gelenkteil 11, wobei dieses in der dargestellten Ausführungsform als ein Federscharnier 12 vorgesehen ist, das einen Abstand A zwischen dem Mittelteil 8 und dem Seitenteil 10 überspannt.

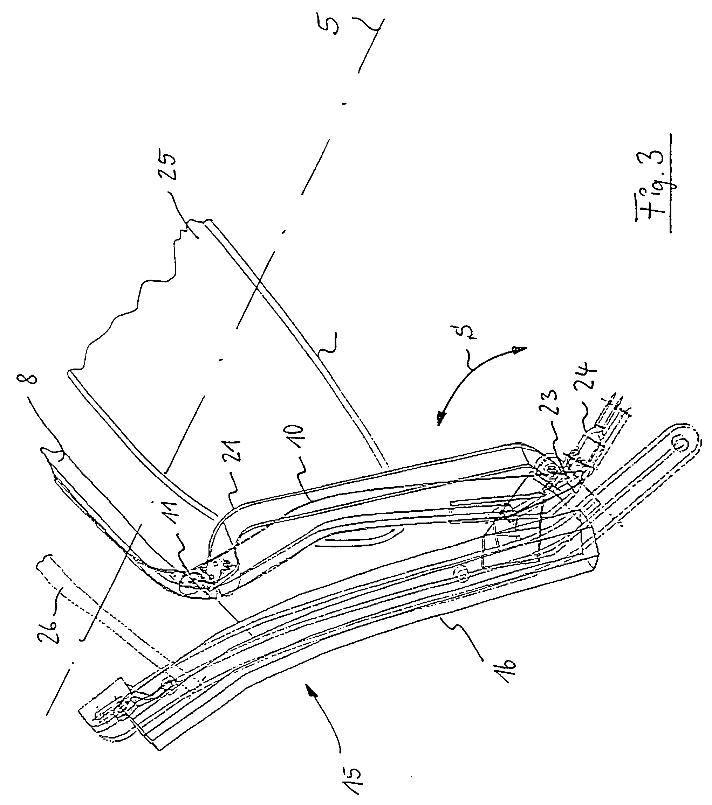

Im endseitigen Bereich zum jeweiligen Hauptschwenklager 6 bzw. 7 hin sind die Seitenteile 9 bzw. 10 jeweils mit einer Zwangssteuerung 13 versehen, so daß bei Bewegung des Verdeckstoffspannbügels 4 (Fig. 3) die beiden Seitenteile 9 und 10 während der Schwenkbewegung gleichzeitig zur Mittellängsebene des Fahrzeugs hin bewegt werden können. Veranschaulicht ist diese Bewegung durch einen Schwenkwinkel 14, der einen der Verschiebung der Längsachsen E-E' der Seitenteile 9 und 10 entsprechenden Schwenkweg prinzipiell verdeutlicht (Fig. 2).

Die Draufsicht gemäß Fig. 2 verdeutlicht außerdem eine mögliche Ausführungsform der Zwangssteuerung 13, die im Bereich einer zweigeteilten Hauptsäule 15 im Nahbereich zu deren Dichtungsträgerteil 16 ein dieses drehbar aufnehmendes Stützteil 17 mit einer Verbindungsstrebe 18 aufweist. Das Dichtungsträgerteil 16 ist andererseits mit dem Seitenteil 10 in zweckmäßiger Ausführung über ein mehrere nicht näher beschriebene Einzelteile aufweisendes Kugelgelenk 19 verbunden.

Das Mittelteil 8 weist eine zweite Verbindungsstrebe 21 auf, die mit der Verbindungsstrebe 18 über ein Gelenk 22 verbunden ist. Im Nahbereich zu diesem Gelenk 22 ist die Zwangssteuerung 13 mit einer Pendelstütze 23 versehen, die gemeinsam mit einem am Seitenteil 10 vorgesehenen Auslegerteil 24 am Kugelgelenk 19 angreift.

Mit dieser Bauteilkombination kann die Breite B (Fig. 2) des Verdeckstoffspannbügels 4 verringert werden, wobei die Zwangssteuerung 13 während einer Schwenkbewegung S (Fig. 3) wirksam ist und über die Pendelstütze 23 und das Auslegerteil 24 das jeweilige Seitenteil 9 bzw. 10 entsprechend der Pfeilrichtung (Schwenkwinkel 14) in Fig. 2 zur Mittellängsachse 5 hin bewegt wird.

In den Darstellungen gemäß Fig. 1 bis Fig. 4 sind außerdem eine Heckscheibe 25, ein Eckspriegel 26 und ein Antriebszylinder 27 verdeutlicht.

## Patentansprüche

1. Faltverdeck für ein Cabriolet-Fahrzeug, dessen randseitig von einem Verdeckgestell untergriffene Dachhaut im heckseitigen Endbereich mit einem Verdeckstoffspannbügel (4) verbunden ist, der seinerseits an seitlichen Hauptschwenklagern (6, 7) karosserieseitig abgestützt ist, **dadurch gekennzeichnet, daß** der Verdeckstoffspannbügel (4) in seiner Längsrichtung mehrteilig ausgebildet ist, wobei die Teile (8, 9, 10) des Verdeckstoffspannbügels (4) jeweils über ein Schwenkgelenk (11, 11') derart miteinander verbunden sind, daß die Breite (B) des Verdeckstoffspannbügels (4) und dessen Spannwirkung an der heckseitigen Dachhaut veränderbar ist.

2. Faltverdeck nach Anspruch 1, **dadurch gekennzeichnet, daß** der Verdeckstoffspannbügel (4) dreiteilig ausgebildet ist und zwei symmetrisch zu einem Mittelteil (8) an den jeweiligen Hauptschwenklagern (6, 7) abgestützte Seitenteile (9, 10) aufweist.

3. Faltverdeck nach Anspruch 1 oder 2, **dadurch gekennzeichnet, daß** das Mittelteil (8) und/oder die Seitenteile (9, 10) des Verdeckstoffspannbügels (4) über eine Zwangssteuerung (13) bewegbar sind.

## Claims

1. Foldable top for convertible vehicle, the roof skin of which is connected to a roof skin tension frame (4) supported from below by a hood framework at the sides of the rear-end area, which for its own part is carried upon main swivel bearings (6, 7) located at the side of the coachwork, **characterised in that** the roof skin tension frame (4) consists of a number of longitudinal elements, whereby each of the elements (8, 9, 10) of the roof skin stretcher hoop (4) is so connected with one another via a swivel bearing (11, 11') that the width (B) of the roof skin tension frame (4) and its tensioning effect on the rear part of the roof skin is capable of adjustment.

2. Foldable top in accordance with claim 1, **characterised in that** the roof skin tension frame (4) consists of three elements and exhibits two side elements (9, 10) disposed symmetrically with respect to the central third element (8) and supported at the appropriate main swivel bearings (6, 7).

3. Foldable top in accordance with claim 1 or claim 2 **characterised in that** the central element (8) and / or the lateral elements (9, 10) of the roof skin tension frame (4) is / are capable of being moved in a mechanically controlled manner (13).

## Revendications

1. Capote pliante pour un véhicule cabriolet, dont la couverture de toit saisie sur le bord en dessous d'un bâti de capote est reliée, dans la zone d'extrémité arrière, à un étrier de tension (4) du matériau de la capote, qui est soutenu-pour sa part sur des paliers de pivotement principaux latéraux (6, 7) côté carrosserie, **caractérisée en ce que** l'étrier de tension (4) du matériau de la capote est conformé en pièces multiples dans sa direction longitudinale, de sorte que les parties (8, 9, 10) de l'étrier de tension (4) du matériau de la capote soient reliées l'une à l'autre respectivement via une articulation pivotante (11, 11') de sorte que la largeur (B) de l'étrier de tension (4) du matériau de la capote et son effet de tension sur la couverture de toit arrière puissent être modifiés.

2. Capote pliante selon la revendication 1, **caractérisée en ce que** l'étrier de tension (4) du matériau de la capote est conformé en trois parties et présente deux parties latérales (9, 10) s'appuyant symétriquement par rapport à la partie centrale (8) sur les paliers de pivotement principaux respectifs (6, 7).

3. Capote pliante selon la revendication 1 ou 2, **caractérisée en ce que** la partie centrale (8) et/ou les parties latérales (9, 10) de l'étrier de tension (4) du matériau de la capote peuvent être déplacées via une commande forcée (13).
